# EUROPÄISCHE PATENTSCHRIFT

(11) **EP 3 488 057 B1**
(45) Veröffentlichungstag und Bekanntmachung des Hinweises auf die Patenterteilung: **23.06.2021**
(21) Anmeldenummer: 17777507.9
(22) Anmeldetag: 18.09.2017
(51) Int. Cl.: E03D 5/00, B61D 35/00, E03B 1/04

(54) **WASSERVERSORGUNGSEINRICHTUNG FÜR EIN SCHIENENFAHRZEUG**
WATER SUPPLY DEVICE FOR A RAIL VEHICLE
DISPOSITIF D'ALIMENTATION EN EAU POUR VÉHICULE FERROVIAIRE

(30) Priorität: 20.09.2016 DE 102016217986
(43) Veröffentlichungstag der Anmeldung: 29.05.2019
(73) Patentinhaber: Siemens Mobility GmbH, 81739 München (DE)
(72) Erfinder: GÄDKER, Simon, 49219 Glandorf (DE); HUGEMANN, Frank, 47829 Krefeld (DE); HÄUSSLER, Andreas, 42659 Solingen (DE); KÜBECK, Thomas, 47929 Grefrath (DE)
(86) Internationale Anmeldenummer: PCT/EP2017/073403
(87) Internationale Veröffentlichungsnummer: WO 2018/054808

(56) Entgegenhaltungen:
- EP-A1- 2 937 480
- EP-B1- 2 484 574
- DE-T2- 68 927 589
- JP-A- S54 160 041

## Beschreibung

Die Erfindung betrifft eine Wasserversorgungseinrichtung für ein Schienenfahrzeug gemäß dem Oberbegriff von Anspruch 1, sowie ein Schienenfahrzeug mit solch einer Wasserversorgungseinrichtung.

Die EP 2 484 574 B1, die EP 2 937 480 A1 sowie die JP S54160041 A betreffen gattungsgemäße Wasserversorgungseinrichtungen mit Grauwasseraufbereitungsvorrichtungen.

Eine Grauwasseraufbereitungsvorrichtung für ein Schienenfahrzeug ist wiederum aus der DE 10 2013 205 084 B3 bekannt. Das Grauwasser aus einem Handwaschbecken kann nun nicht mehr nur auf das Gleis abgeleitet oder einem Abwassertank zugeführt werden, sondern es kann aufgefangen, aufbereitet und einem WC-Modul als Spülwasser zur Verfügung gestellt werden. Dadurch kann Frischwasser eingespart werden, mit welchem das WC-Modul bisher direkt versorgt wurde.

Für den Fall, dass die Grauwasseraufbereitungsvorrichtung nicht funktioniert oder nicht genügend Grauwasser zur Verfügung steht, muss trotzdem sicher gestellt werden, dass das WC-Modul mit Spülwasser versorgt wird.

Gemäß der Lehre der DE 10 2013 205 084 B3 sowie des in Fig. 1 der EP 2 484 574 B1 beschriebenen Stands der Technik wird Frischwasser in die Grauwasseraufbereitungsvorrichtung geführt.

Die EP 2 484 574 B1 offenbart dagegen eine Bypass-Lösung für eine Grauwasseraufbereitungsvorrichtung. Sobald nicht genügend Grauwasser zur Verfügung steht, wird ein Bypass zur Grauwasseraufbereitungsvorrichtung von einem Frischwassertank zum WC-Modul geöffnet und das WC-Modul mit Frischwasser versorgt.

Die DE 689 27 589 T2 lehrt nun eine Wasserversorgungseinrichtung mit einer Grauwasseraufbereitungsvorrichtung für ein Transportfahrzeug, welches eine Zuführung von Frischwasser zum Grauwasser vorsieht, um eine WC-Funktion auch bei geringem Grauwasserstand zu ermöglichen.

Der Erfindung liegt die Aufgabe zugrunde, eine kostengünstig herzustellende und zu betreibende Wasserversorgungseinrichtung vorzuschlagen.

Gelöst wird die Aufgabe durch den Gegenstand des unabhängigen Patentanspruchs 1. Weiterbildungen und Ausgestaltungen der Erfindung finden sich in den Merkmalen der abhängigen Patentansprüche wieder.

Ein erfindungsgemäßes Schienenfahrzeug umfasst wenigstens eine erfindungsgemäße Wasserversorgungseinrichtung.

Eine erfindungsgemäße Wasserversorgungseinrichtung umfasst wiederum wenigstens einen Frischwasserbereich und wenigstens einen Grauwasserbereich, wobei der Frischwasserbereich seinerseits zumindest einen Frischwassertank, zumindest eine Frischwasserausgabestelle und eine Frischwasserzuleitung zwischen dem Frischwassertank und der Frischwasserausgabestelle umfasst und wobei der Grauwasserbereich zumindest eine Grauwassereingabestelle, zumindest eine Aufbereitungsvorrichtung für Grauwasser, zumindest eine Ausgabestelle für aufbereitetes Grauwasser, sowie eine Grauwasserzuleitung zwischen der Grauwassereingabestelle und der Aufbereitungsvorrichtung für Grauwasser und eine Zuleitung für aufgearbeitetes Grauwasser zwischen der Aufbereitungsvorrichtung für Grauwasser und der Ausgabestelle für aufbereitetes Grauwasser umfasst.

Die Aufbereitungsvorrichtung für Grauwasser umfasst ihrerseits mindestens einen Grauwasserbehälter, mindestens einen Grauwasserzulauf in einem Einlassbereich des Grauwasserbehälters, mindestens einen Ablauf für aufbereitetes Grauwasser in einem Auslassbereich des Grauwasserbehälters und mindestens einen Filter zwischen dem Ein- und dem Auslassbereich.

Die einer Grauwasserzuleitung zwischen der Grauwassereingabestelle und der Aufbereitungsvorrichtung für Grauwasser ist mit dem Grauwasserzulauf im Einlassbereich des Grauwasserbehälters der Aufbereitungsvorrichtung für Grauwasser verbunden. Die Zuleitung für aufgearbeitetes Grauwasser zwischen der Aufbereitungsvorrichtung für Grauwasser und der Ausgabestelle für aufbereitetes Grauwasser ist mit dem Ablauf für aufbereitetes Grauwasser im Auslassbereich des Grauwasserbehälters der Aufbereitungsvorrichtung für Grauwasser verbunden.

Darüber hinaus umfasst die Aufbereitungsvorrichtung für Grauwasser mindestens einen Frischwasserzulauf zur Zufuhr von Frischwasser, welcher im Auslassbereich des Grauwasserbehälters der Aufbereitungsvorrichtung für Grauwasser angeordnet ist. Der Frischwasserzulauf ist über eine Frischwasserzuleitung mit dem Frischwassertank verbunden.

Insbesondere zweigt die Frischwasserzuleitung vom Frischwassertank zum Frischwasserzulauf zur Zufuhr von Frischwasser im Auslassbereich des Grauwassertanks der Aufbereitungsvorrichtung für Grauwasser von der Frischwasserzuleitung zwischen dem Frischwassertank und der Frischwasserausgabestelle ab.

Des Weiteren ist vorgesehen, dass der wenigstens eine Filter zwischen Ein- und Auslassbereich des Grauwasserbehälters der Aufbereitungsvorrichtung für Grauwasser ein Kulissenfilter ist, insbesondere ein Kulissenfilter mit zumindest einem beweglichen Schieber, der in einer abgesenkten Position einen Boden des Grauwasserbehälters berührt und in einer angehobenen Position von diesem abgehoben ist. Vorteilhaft ist dann ein vom Einlassbereich zum Auslassbereich hin ansteigender Boden des Grauwasserbehälters. Der Frischwasserzulauf im Auslassbereich kann dann gleichzeitig zur Reinigung des Grauwasserbehälters dienen, um die Sedimente bei geöffnetem Reinigungsabfluss im Einlassbereich und gehobenen Schiebern heraus zu spülen.

Zusätzlich kann der wenigstens eine Filter zwischen Ein- und Auslassbereich des Grauwasserbehälters der Aufbereitungsvorrichtung für Grauwasser ein Sieb oder eine anders geartete Membran umfassen, welches für ein Membrantrennverfahren geeignet ausgebildet ist.

Die Grauwassereingabestelle kann beispielsweise als Auffang- oder Sammelstelle von Grauwasser dienen. Alternativ wird das Grauwasser von der Grauwassereingabestelle erzeugt. Eine Spül- oder Waschmaschine erzeugt beispielsweise Grauwasser. Ein Handwaschbecken hingegen fängt das durch einen Handwaschvorgang anfallende Grauwasser auf. Weitergebildet handelt es sich bei der Grauwassereingabestelle somit um ein Handwaschbecken, insbesondere einer Sanitärzelle des Schienenfahrzeugs. Es kann Teil eines Waschbeckenmoduls sein, welches seinerseits einen Wasserhahn als Frischwasserausgabestelle umfasst, welcher oberhalb des Handwaschbeckens angeordnet ist, so dass das aus dem Wasserhahn austretende Frischwasser durch das Handwaschbecken aufgefangen wird, wodurch es in diesem Augenblick als Grauwasser gilt und entsprechend weiter als Grauwasser behandelt wird. Das Schienenfahrzeug kann somit mindestens ein Waschbeckenmodul aufweisen, welches die Frischwasserausgabestelle sowie die Grauwassereingabestelle umfasst.

Die Wasserversorgungseinrichtung kann fürderhin wenigstens einen Schwarzwasserbereich mit zumindest einem Abwassertank und wenigstens einer Schwarzwassereingabestelle, sowie einer Schwarzwasserleitung zwischen der Schwarzwassereingabestelle und dem Abwassertank aufweisen.

Gemäß einer Weiterbildung weist der Grauwasserbehälter der Aufbereitungsvorrichtung für Grauwasser einen Reinigungsabfluss auf, welcher insbesondere bodenseitig im Einlassbereich des Grauwasserbehälters angeordnet ist, insbesondere an dessen tiefster Stelle, damit der Grauwasserbehälter, zur sogenannten Frostschutzentleerung, näherungsweise vollständig entleerbar ist. Der Reinigungsabfluss kann über eine Schwarz- oder Abwasserleitung mit dem Abwassertank verbunden sein.

Weitergebildet weist der Grauwasserbehälter der Aufbereitungsvorrichtung für Grauwasser einen Überlauf auf, welcher ebenfalls im Einlassbereich des Grauwasserbehälters angeordnet sein kann. Auch der Überlauf kann über eine Schwarz- oder Abwasserleitung mit dem Abwassertank verbunden sein. Überschüssiges Grauwasser wird durch den Überlauf abgeführt. Daher ist der Überlauf insbesondere im deckennahen Bereich des Grauwasserbehälters angeordnet.

Überdies kann das Schienenfahrzeug mindestens ein WC-Modul aufweisen, welches die Ausgabestelle für aufbereitetes Grauwasser sowie die Schwarzwassereingabestelle umfasst. Analog zum Waschbeckenmodul können Spüldüsen des WC-Moduls die Ausgabestelle für aufbereitetes Grauwasser bilden und eine WC-Schüssel bildet die Schwarzwassereingabestelle. Von dort wird das aufgefangene Schwarzwasser zum Abwassertank geführt.

Eine weitere Weiterbildung der Erfindung besteht darin, dass die Ausgabestelle für aufbereitetes Grauwasser oberhalb der Aufbereitungsvorrichtung für Grauwasser angeordnet ist. Insbesondere ist die Ausgabestelle für aufbereitetes Grauwasser oberhalb - also mit einem Abstand entgegen der Schwerkraft und somit in vertikaler Richtung - des Ablaufs für aufbereitetes Grauwasser im Auslassbereich des Grauwasserbehälters der Aufbereitungsvorrichtung für Grauwasser angeordnet. Gleichermaßen kann der Grauwasserbehälter der Aufbereitungsvorrichtung für Grauwasser unterhalb der Grauwassereingabestelle und somit mit einem Abstand in Schwerkraftrichtung zur Grauwassereingabestelle angeordnet sein.

Zur Förderung von aufbereitetem Grauwasser vom Ablauf für aufbereitetes Grauwasser im Auslassbereich des Grauwasserbehälters zur Ausgabestelle für aufbereitetes Grauwasser kann eine Pumpe in der Zuleitung für aufgearbeitetes Grauwasser zwischen dem Ablauf für aufbereitetes Grauwasser im Auslassbereich des Grauwasserbehälters der Aufbereitungsvorrichtung für Grauwasser und der Ausgabestelle für aufbereitetes Grauwasser vorgesehen sein. Unter dem Begriff Pumpe sollen hier sämtliche Arbeitsmaschinen zur Förderung von Fluid als mit umfasst gelten.

Alternativ kann die Zuleitung für aufgearbeitetes Grauwasser zwischen dem Ablauf für aufbereitetes Grauwasser im Auslassbereich des Grauwasserbehälters der Aufbereitungsvorrichtung für Grauwasser und der Ausgabestelle für aufbereitetes Grauwasser frei sein von einer Pumpe zur Förderung von aufbereitetem Grauwasser vom Ablauf für aufbereitetes Grauwasser im Auslassbereich des Grauwasserbehälters der Aufbereitungsvorrichtung für Grauwasser zur Ausgabestelle für aufbereitetes Grauwasser. Dann umfasst das WC-Modul einen Druckwassererzeuger. Der Druckwassererzeuger saugt das aufbereitete Grauwasser mit Unterdruck an und kann somit ebenfalls Höhendifferenzen überwinden.

Somit verbleibt kein aufbereitetes Grauwasser in der Zuleitung für aufgearbeitetes Grauwasser zwischen dem Ablauf für aufbereitetes Grauwasser im Auslassbereich des Grauwasserbehälters der Aufbereitungsvorrichtung für Grauwasser und der Ausgabestelle für aufbereitetes Grauwasser, was zu einer einfachen und effektiven Sicherung der Zuleitung gegen Frost führt.

Zur Regulierung des Durchflusses an Frischwasser durch die Frischwasserausgabestelle und/oder den Frischwasserzulauf und/oder zur Regulierung des Durchflusses an Schwarzwasser durch den Reinigungsabfluss kann die Wasserversorgungseinrichtung stromaufwärts, insbesondere unmittelbar vor, der Frischwasserausgabestelle und/oder stromaufwärts, insbesondere unmittelbar vor, dem Frischwasserzulauf und/oder stromabwärts, insbesondere unmittelbar nach, dem Reinigungsabfluss jeweils zumindest ein Absperrorgan, beispielsweise ein Ventil aufweisen, z.B. in den stromaufwärts angeordneten Frischwasserzuleitungen bzw. in der stromabwärts angeordneten Schwarzwasserleitung.

Die Absperrorgane in der Frischwasserzuleitung zwischen dem Frischwassertank und der Frischwasserausgabestelle sowie zwischen dem Frischwassertank und dem Frischwasserzulauf sind insbesondere nach einer Verzweigung in der Frischwasserzuleitung zur Frischwasserausgabestelle und zum Frischwasserzulauf vorgesehen, so dass sowohl das dem Grauwasserbehälter zugeführte Frischwasser als auch das der Frischwasserausgabestelle zugeführte Frischwasser zumindest jeweils, insbesondere jeweils nur das entsprechend zugeordnete Absperrorgan passiert.

Für den Fall, dass die Aufbereitungsvorrichtung für Grauwasser nicht funktioniert oder nicht genügend aufbereitetes Grauwasser zur Verfügung steht, muss trotzdem sicher gestellt werden, dass das WC-Modul mit Spülwasser versorgt wird.

Dazu kann die Aufbereitungsvorrichtung für Grauwasser einerseits wenigstens einen Füllstandsensor umfassen, welcher im Auslassbereich des Grauwasserbehälters angeordnet ist. Dieser ist zumindest ausgebildet, einen Grenzstand an aufbereitetem Grauwasser zu erfassen.

Andererseits kann die Ausgabestelle für aufbereitetes Grauwasser frei von einer unmittelbaren Zuleitung von Frischwasser aus dem Frischwassertank sein, abgesehen vom Frischwasserzulauf in den Grauwasserbehälter, der unmittelbar über einer Frischwasserzuleitung mit dem Frischwassertank verbunden ist. Eine weitere Zuleitung ist daher überflüssig. Da der Frischwasserzulauf im Auslassbereich des Grauwasserbehälters angeordnet ist, kann ein Mangel an aufbereitetem Grauwasser im Auslassbereich des Grauwasserbehälters einfach durch zugeführtes Frischwasser ausgeglichen werden.

Überdies kann die Wasserversorgungseinrichtung eine Steuerungseinheit umfassen, die ausgebildet ist, zumindest das Absperrorgan stromaufwärts des Frischwasserzulaufs des Grauwasserbehälters der Aufbereitungsvorrichtung für Grauwasser zur Regulierung des Durchflusses an Frischwasser aus dem Frischwassertank durch den Frischwasserzulauf in Abhängigkeit des Signals des Füllstandsensors zu steuern, zumindest zu öffnen und zu schließen.

Der Füllstandsensor detektiert den Füllstand an aufbereitetem Grauwasser im Grauwasserbehälter und erzeugt ein entsprechendes Signal zumindest für den Fall, dass nicht mehr genügend aufbereitetes Grauwasser im Grauwasserbehälter ist, so dass der Frischwasserzulauf solange geöffnet wird, bis der Minimalstand wieder erreicht ist.

Das Absperrorgan zur Regulierung des Durchflusses an Frischwasser durch die Frischwasserausgabestelle kann beispielsweise manuell durch einen Benutzer betätigt werden. Das Absperrorgan zur Regulierung des Durchflusses an Schwarzwasser durch den Reinigungsabfluss kann ebenfalls von der Steuerungseinheit in vorgegebenen zeitlichen Intervallen oder manuell bei Wartungsarbeiten geöffnet und geschlossen werden.

Es kann auch ein Absperrorgan vorgesehen sein, zur Regulierung des Durchflusses an aufbereitetem Grauwasser aus dem Grauwasserbehälter durch den Ablauf für aufbereitetes Grauwasser im Auslassbereich des Grauwasserbehälters, welches insbesondere stromabwärts, insbesondere unmittelbar nach dem Ablauf für aufbereitetes Grauwasser des Grauwasserbehälters angeordnet ist. Die Wasserversorgungseinrichtung kann dann auch eine Steuerungseinheit umfassen, insbesondere handelt es sich um dieselbe Steuerungseinheit wie oben, die ausgebildet ist, zumindest das Absperrorgan stromabwärts des Ablaufs für aufbereitetes Grauwasser des Grauwasserbehälters zur Regulierung des Durchflusses an aufbereitetem Grauwasser aus dem Grauwasserbehälter durch den Ablauf für aufbereitetes Grauwasser im Auslassbereich des Grauwasserbehälters in Abhängigkeit eines Signals der Ausgabestelle für aufbereitetes Grauwasser, insbesondere des WC-Moduls, beispielsweise eines Betätigungsschalters einer Spüleinrichtung, zu steuern, zumindest zu öffnen und zu schließen. Ist eine Pumpe vorhanden, kann auf dieses Absperrorgan aber auch verzichtet werden - die Zuleitung für aufgearbeitetes Grauwasser zwischen dem Ablauf für aufbereitetes Grauwasser im Auslassbereich des Grauwasserbehälters der Aufbereitungsvorrichtung für Grauwasser und der zumindest einen Ausgabestelle für aufbereitetes Grauwasser ist, abgesehen von der Pumpe, frei von einem Absperrorgan. Die Steuerungseinheit kann dann entsprechend auch zur Steuerung der Pumpe ausgebildet sein. Eine weitere Variante besteht darin, dass das WC-Modul einen Druckwassererzeuger umfasst, der das aufbereitete Grauwasser mit Unterdruck ansaugt. Dann wiederum könnte ein Rückschlagventil stromabwärts des Ablaufs für aufbereitetes Grauwasser im Auslassbereich des Grauwasserbehälters der Aufbereitungsvorrichtung für Grauwasser in der Zuleitung für aufbereitetes Grauwasser zwischen dem Ablauf für aufbereitetes Grauwasser im Auslassbereich des Grauwasserbehälters der Aufbereitungsvorrichtung für Grauwasser und der zumindest einen Ausgabestelle für aufbereitetes Grauwasser, welches nur bei einem vorgegebenem Unterdruck in der Zuleitung für aufbereitetes Grauwasser zwischen dem Ablauf für aufbereitetes Grauwasser im Auslassbereich des Grauwasserbehälters der Aufbereitungsvorrichtung für Grauwasser und der zumindest einen Ausgabestelle für aufbereitetes Grauwasser, erzeugt durch den Druckwassererzeuger, öffnet und ansonsten geschlossen ist.

Das Absperrorgan stromabwärts des Reinigungsabflusses kann als einfaches Quetschventil ausgebildet sein.

Weitergebildet ist die Frischwasserzuleitung zwischen dem Frischwassertank und der Frischwasserausgabestelle frei von einer Pumpe zur Förderung von Frischwasser zwischen dem Frischwassertank und der Frischwasserausgabestelle, insbesondere wobei der Frischwassertank der Aufbereitungsvorrichtung für Grauwasser entgegen der Schwerkraftrichtung oberhalb der Frischwasserausgabestelle angeordnet ist. Es handelt sich somit um eine sogenannte Fallwasseranlage.

Eine weitere Weiterbildung der Erfindung liegt darin, dass Schmutzfilter in der Frischwasserzuleitung zwischen dem Frischwassertank und der Frischwasserausgabestelle und/oder in der Zuleitung für aufbereitetes Grauwasser zwischen dem Ablauf für aufbereitetes Grauwasser im Auslassbereich der Aufbereitungsvorrichtung für Grauwasser und der Ausgabestelle für aufbereitetes Grauwasser vorgesehen sind.

Das Schmutzfilter in der Frischwasserzuleitung zwischen dem Frischwassertank und der Frischwasserausgabestelle ist insbesondere vor einem Abzweig zum Frischwasserzulauf zur Zufuhr von Frischwasser im Auslassbereich der Aufbereitungsvorrichtung für Grauwasser vorgesehen, so dass auch das dem Grauwasserbehälter zugeführte Frischwasser aus dem Frischwassertank das Schmutzfilter passiert.

Durch die erfindungsgemäße Aufbereitung von Grauwasser entstehen Vorteile bezüglich Gewicht, Bauraum, Arbeitskosten und Wasserkosten. So muss beispielsweise weniger Masse muss vom Schienenfahrzeug mitgeführt werden. Frischwasser- und Abwassertanks können entsprechend kleiner ausgelegt werden und/oder Frischwasser- und Abwassertanks können gegebenenfalls seltener aufgefüllt respektive entleert werden. Die Erfindung trägt zur Nachhaltigkeit durch die Einsparung von Wasser, vor allem in trockenen Regionen, bei. Dies alles trägt zur Senkung der sogenannten Life Cycle Costs bei.

Da sich sowohl der Ablauf für aufbereitetes Grauwasser als auch der Frischwasserzulauf im Auslassbereich des Grauwasserbehälters befinden, sind die WC-Funktionen auch bei Verstopfung des Filters gegeben.

Des Weiteren kann sich die Aufbereitungsvorrichtung für Grauwasser, insbesondere der Ablauf des Grauwasserbehälters der Aufbereitungsvorrichtung für Grauwasser, unterhalb Ausgabestelle für aufbereitetes Grauwasser, also beispielsweise unterhalb eines Zulaufs oder einer Spüldüse des WC-Moduls befinden, sodass das Wasser nicht als Fallwasser zum WC-Modul fließen kann und bei Frost somit ansonsten Berstgefahr bestehen würde. Zur Überbrückung von Höhendifferenzen sind daher entweder eine Pumpe oder ein WC-Modul mit Druckwassererzeuger vorgesehen.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.

Durchgezogene Linien entlang von Wasserleitungen signalisieren den Verlauf von Frischwasser. Diese führen hier insbesondere nur von oben nach unten in Richtung der Schwerkraft und führen entsprechend nur sogenanntes Fallwasser. Gestrichelte Linien hingegen skizzieren den Verlauf von Grauwasser oder aufbereitetem Grauwasser. Strichgepunktete Linien verlaufen entlang schwarzwasserführender Leitungen.
- Fig. 1: zeigt schematisch eine erfindungsgemäße Wasserversorgungseinrichtung eines Schienenfahrzeugs mit einer Pumpe,
- Fig. 2: zeigt das Wasserschema ohne Pumpe,
- Fig. 3: zeigt eine Aufbereitungsvorrichtung für Grauwasser im Längsschnitt von der Seite,
- Fig. 4: zeigt die Aufbereitungsvorrichtung für Grauwasser aus Fig. 3 im Längsschnitt von der oben.

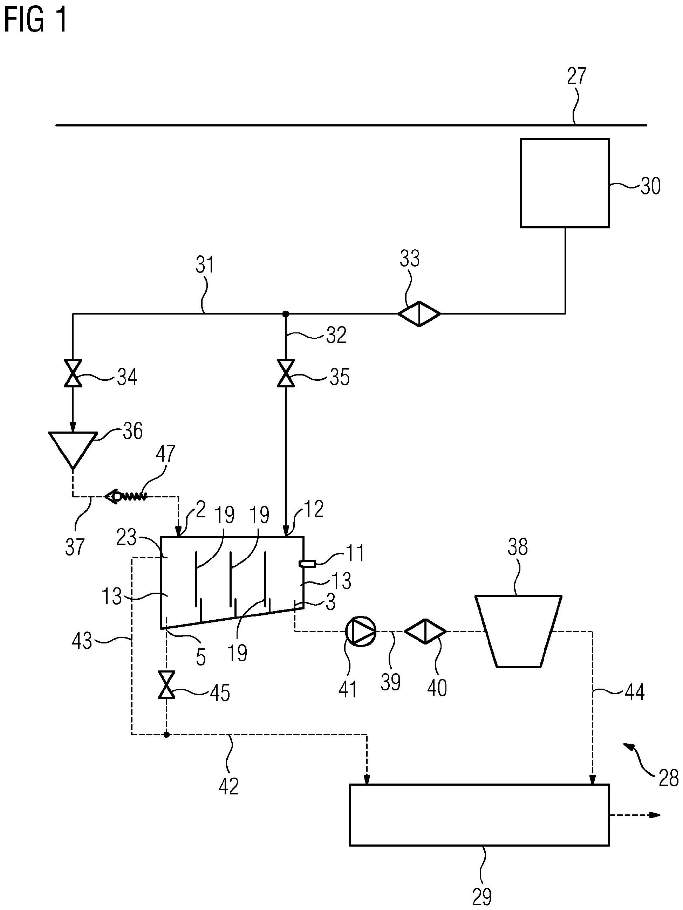

In Fig. 1 ist ein sogenanntes Wasserschema einer erfindungsgemäßen Wasserversorgungseinrichtung eines Schienenfahrzeugs dargestellt. Die Bezugszeichen 27 und 28 kennzeichnen dabei ein Dach 27 des Wagenkastens und einen Boden 28 des Wagenkastens, zwischen welchen die Wasserversorgungseinrichtung größtenteils angeordnet ist. Einzig ein Abwassertank 29 kann unterhalb des Bodens 28 angeordnet sein. Ein Frischwassertank 30 hingegen ist bevorzugt unter dem Dach 27 angeordnet. Der Frischwassertank 30 kann eine Öffnung zur Umwelt des Schienenfahrzeugs aufweisen, um ihn von außen zu befüllen. Analog kann der Abwassertank 29 eine Öffnung zur Umwelt des Schienenfahrzeugs aufweisen, um ihn von außen abzusaugen.

Frischwasser aus dem Frischwassertank 30 wird durch eine Frischwasserzuleitung 31 einem Waschbecken zugeführt. Das Ende der Frischwasserzuleitung 31 über dem Waschbecken, aus welchem das Frischwasser in das Waschbecken fließt, wird als Frischwasserausgabestelle bezeichnet, das Waschbecken wirkt als Grauwassereingabestelle 36. Vorher passiert es einen Schmutzfilter 33 und ein dem Waschbecken als Grauwassereingabestelle 36 zugeordnetes und unmittelbar über dem Waschbecken angeordnetes Absperrorgan 34, beispielsweise ein Wasserhahn. Zwischen dem Schmutzfilter 33 und dem Absperrorgan 34 zweigt eine Frischwasserzuleitung 32 von der Frischwasserzuleitung 31 ab. Diese führt Frischwasser aus dem Frischwassertank 30 zu einem Grauwasserbehälter 1 einer Aufbereitungsvorrichtung für Grauwasser.

Ein Frischwasserzulauf 12 des Grauwasserbehälters 1 zur Zufuhr von Frischwasser ist in einem Auslassbereich 18 des Grauwasserbehälters 1 der Aufbereitungsvorrichtung für Grauwasser angeordnet. Der Frischwasserzulauf 12 ist mit der Frischwasserzuleitung 32 verbunden. Sobald das Frischwasser den Frischwasserzulauf 12 passiert und in den Auslassbereich 18 des Grauwasserbehälters 1 gelangt, gilt es ebenfalls als Grauwasser.

Damit endet der Frischwasserbereich vom Frischwassertank 30 aus gesehen mit der Frischwasserausgabestelle einerseits und dem Frischwasserzulauf 12 andererseits. Vor dem Frischwasserzulauf 12 und somit stromaufwärts des Frischwasserzulauf 12 in der Frischwasserzuleitung 32, insbesondere nach dem Schmutzfilter 33, kann ein Absperrorgan 35 zur Regulierung der Frischwasserzufuhr in den Grauwasserbehälter 1 angeordnet sein.

Das Grauwasser aus dem Waschbecken als Grauwassereingabestelle 36 wird in den Grauwasserbehälter 1 der Aufbereitungsvorrichtung für Grauwasser geleitet und dort durch Sedimentation des enthaltenen Schmutzes gereinigt.

Dazu umfasst der Grauwasserbehälter 1 der Aufbereitungsvorrichtung für Grauwasser fürderhin einen Grauwasserzulauf 2 in einem Einlassbereich 13 des Grauwasserbehälters 1, einen Ablauf 3 für aufbereitetes Grauwasser im Auslassbereich 18 des Grauwasserbehälters 1, sowie wenigstens einen Filter 19 zwischen Einlassbereich 13 und Auslassbereich 18 des Grauwasserbehälters 1.

Hier handelt es sich um einen Kulissenfilter 19 mit drei fest stehenden Kulissen und drei den Kulissen zugeordneten, beweglichen Schiebern, die in einer abgesenkten Position den Boden des Grauwasserbehälters 1 berühren und in einer angehobenen Position von diesem abgehoben sind.

Eine Grauwasserzuleitung 37 ist zwischen dem Waschbecken als Grauwassereingabestelle 36 und dem Grauwasserzulauf 2 im Einlassbereich 13 des Grauwasserbehälters 1 der Aufbereitungsvorrichtung für Grauwasser angeordnet. Um zu verhindern, dass Gerüche über die Grauwasserzuleitung 37 vom Grauwasserbehälter 1 über das Waschbecken als Grauwassereingabestelle 36 in den Innenraum des Schienenfahrzeugs abgegeben werden, weist die Grauwasserzuleitung 37 zwischen dem Waschbecken als Grauwassereingabestelle 36 und dem Grauwasserzulauf 2 des Grauwasserbehälters 1 ein Rückschlagventil 47 auf. Neben der Funktion als Geruchsverschluss kann dieses auch als Druckschutz wirken.

Hinter den Reinigungsstufen des Filters 19 kann das aufgearbeitete Grauwasser für ein WC-Modul als Ausgabestelle für aufbereitetes Grauwasser 38 über einen Ablauf 3 entnommen werden. Da sich die Aufbereitungsvorrichtung für Grauwasser unterhalb des Waschbeckens als Grauwassereingabestelle 36 befindet, kann sich dieser Ablauf 3 unterhalb der Ausgabestelle für das aufbereitete Grauwasser des WC-Moduls, beispielsweise einer Spüldüse oder eines sonstigen Zulaufs, befinden. Dafür ist hier eine Pumpe 41 integriert, die das aufbereitete Grauwasser auf die erforderliche Höhe pumpt. Hinter der Pumpe 41 oder auch davor ist ein Schmutzfänger 40 platziert, der das WC-Modul vor zu großen Restpartikeln schützt.

Pumpe 41 und Schmutzfänger 40 sind dazu in einer Zuleitung 39 für aufgearbeitetes Grauwasser zwischen dem Ablauf 3 für aufbereitetes Grauwasser im Auslassbereich 18 des Grauwasserbehälters 1 der Aufbereitungsvorrichtung für Grauwasser und der zumindest einen Ausgabestelle 38 für aufbereitetes Grauwasser angeordnet. Das WC-Modul ist derart ausgebildet, dass es mit aufbereitetem Grauwasser gespült wird.

Das im WC anfallende Schwarzwasser wird über eine Schwarzwasserleitung 44 in den Abwassertank 29 abgeführt. Gleichermaßen wird das sedimentbeladene Abwasser des Grauwasserbehälters 1 aus einem bodenseitig im Einlassbereich 13 des Grauwasserbehälters 1 angeordneten Reinigungsabfluss 5 dem Abwassertank 29 über eine weitere Abwasserleitung 42, mit welcher der angeordneten Reinigungsabfluss 5 sowie der Abwassertank 29 verbunden sind, zugeführt. Ein Absperrorgan 45, hier ein Quetschventil, unterhalb des Reinigungsabfluss 5 gibt den Abwasserstrom frei. Darüber hinaus kann der Grauwasserbehälter 1 einen Überlauf 23 aufweisen, der mit einer Überlaufleitung 43 verbunden ist, die ihrerseits in die Abwasserleitung 42 mündet.

Damit dem WC-Modul immer genügend Wasser zur Verfügung steht, auch bei unregelmäßiger Benutzung des Waschbeckens und bei Verstopfung des Filters 19 der Aufbereitungsvorrichtung für Grauwasser, befindet sich in dem Auslassbereich 18 ein Füllstandsensor 11, hier ein Grenzstandsensor, der detektiert, sobald er nicht mehr mit Wasser bedeckt ist. Über den Frischwasserzulauf 12 oberhalb wird dann solange Frischwasser in den Grauwasserbehälter 1 der Aufbereitungsvorrichtung für Grauwasser dosiert bis der Füllstandsensor 11 wieder mit Wasser bedeckt ist.

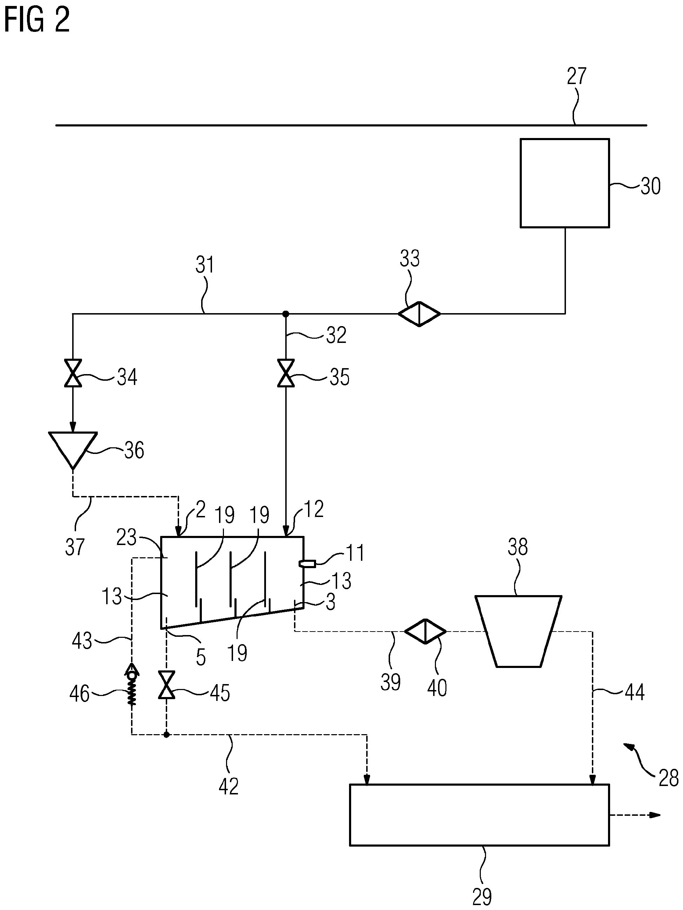

Fig. 2 ist eine Variante des Wasserschemas dargestellt, die ohne Pumpe auskommt, da das zusammen mit der Anlage verbaute WC-Modul einen Druckwassererzeuger enthält. Dieser saugt das Wasser mit Unterdruck an und kann so Höhendifferenzen überbrücken. Zusätzlich ist in der Überlaufleitung 43 ein Rückschlagventil 46 vorgesehen, so dass Flüssigkeit aus dem Grauwasserbehälter ungehindert abfließen kann, Druckstöße von Seiten des Abwassertanks 29 jedoch vom Grauwasserbehälter ferngehalten werden. Die Überlaufleitung 43 mündet schließlich stromabwärts des Quetschventils 45 in die Abwasserleitung 42. Das Rückschlagventil 46 dient als Geruchsverschluss und als Druckschutz und ist alternativ zum Rückschlagventil 47 aus der Ausführung gemäß Fig. 1 vorgesehen, auf welches dann verzichtet werden kann.

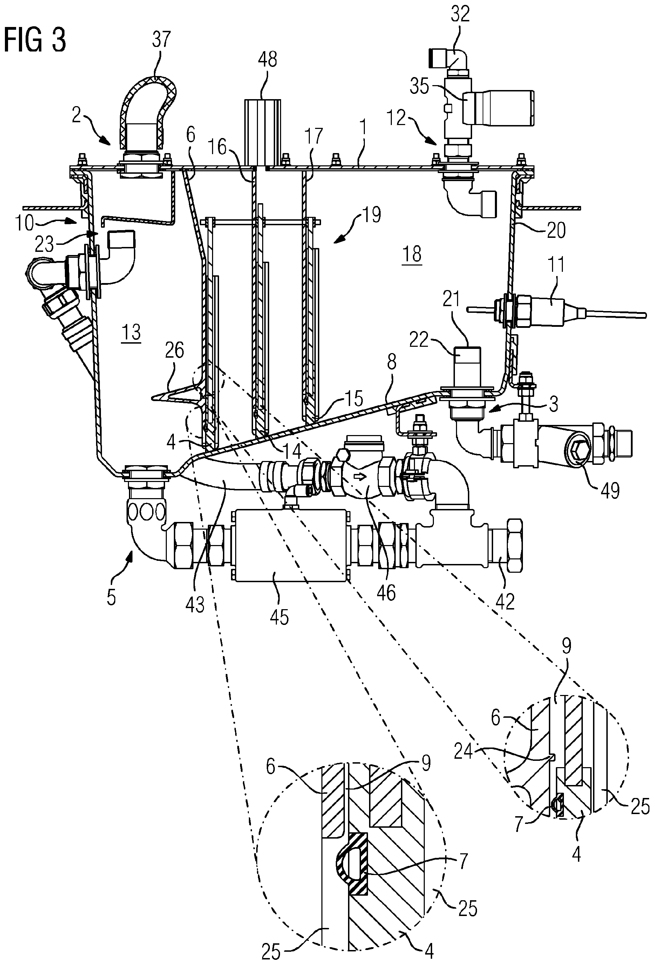

In Fig. 3 ist ein Ausführungsbeispiel einer Aufbereitungsvorrichtung für Grauwasser im Längsschnitt dargestellt.

Die Aufbereitungsvorrichtung für Grauwasser dient zur Durchführung eines Verfahrens zur Sedimentation, welche Aufbereitungsvorrichtung sich hier durch einen längs angeordneten Kulissenweg sowie Einrichtungen zur Selbstreinigung der Kulissen auszeichnet.

Die Aufbereitungsvorrichtung umfasst einen Grauwasserzulauf 2 in einem Einlassbereich 13, einen Ablauf 3 für aufbereitetes Grauwasser in einem Auslassbereich 18 und einen Kulissenfilter 19 zwischen Ein- und Auslassbereich. Einlassbereich 13, Kulissenfilter 19 und Auslassbereich 18 sind hintereinander aufgereiht.

Der Kulissenfilter 19 umfasst hier drei feststehende Kulissen 6, 16 und 17 sowie drei bewegliche Schieber 4, 14 und 15, die in einer abgesenkten Position den Boden 8 des Grauwasserbehälters 1 berühren und in einer angehobenen Position von diesem abgehoben sind.

Der Boden 8 des Grauwasserbehälters 1 ist vom Einlassbereich 13 aus gesehen zum Auslassbereich 18 hin ansteigend ausgebildet.

Ein Reinigungsabfluss 5 ist bodenseitig im Einlassbereich 13, ein Frischwasserzulauf 12 zur Zufuhr von Frischwasser ist deckelseitig im Auslassbereich 18 angeordnet.

Auch ein Überlauf 23 ist nach oben offen im Einlassbereich 13 angeordnet, sowie ein Strahlbrecher 10, der oberhalb des Überlaufs 23 so zum Grauwasserzulauf 2 ausgerichtet ist, dass der Überlauf 23 zum Grauwasserzufluss 2 hin abgeschirmt ist. Über den Grauwasserzulauf 2 fließt das Grauwasser in den Grauwasserbehälter 1. Der Strom wird gegen den hier rund ausgebildeten Strahlbrecher 10 geleitet, der den Strom in alle Richtungen aufteilt und abbremst. Unter dem Strahlbrecher 10 befindet sich der Überlauf 23, so dass kein Wasser in den Überlauf 23 spritzt. Im unteren Bereich des Einlassbereichs 13 befindet sich zusätzlich ein Leitblech 26, welches den Strom daran hindert, direkt zum Spalt 9 zwischen erster Kulisse 4 und erstem Schieber 6 zu fließen.

Die drei beweglichen Schieber 4, 14 und 15 laufen in Führungen 25 und sorgen zusammen mit den festen Kulissen 6, 16 und 17 dafür, dass das vorgegebene Spaltmaß des Spalts 9 zwischen Kulissen und Schiebern eingehalten wird. Die Schieber 4, 14 und 15 werden horizontal geführt, um eine vertikale Bewegung auszuführen. Die Führungen 25 sind hier als Nuten in Seitenwänden des Grauwasserbehälters 1 ausgeführt. Alternative Formen, wie beispielsweise Führungsschienen, sind denkbar.

Die Schieber 4, 14 und 15 selbst sind gemäß diesem Ausgestaltungsbeispiel mechanisch über ein Gestänge miteinander verbunden, so dass sie gemeinsam angehoben und abgesenkt werden können. Das Gestänge ist dazu mit einem Hubzylinder 48, hier einem pneumatischen Hubzylinder, verbunden. Anstelle des pneumatischen Hubzylinders können auch hydraulische oder elektrische Aktoren zum Heben und Senken der Schieber 4, 14 und 15, beispielsweise auch einzeln und damit getrennt voneinander, eingesetzt werden.

In den Schiebern 4, 14 und 15 ist jeweils eine Nut vorgesehen, in welcher sich eine flexible Lippe 7 befindet. Bei Bedarf können die Schieber 4, 14 und 15 bewegt werden, um die Spalte 9 zu reinigen. Dazu ist oberhalb des Spaltes 9 an den Kulissen 6, 16 und 17 noch ein fester Abstreifer 24 angebracht, der dazu dient, dass der Schmutz sich von der flexiblen Lippe 7 löst.

Nachdem das Wasser die drei Kulissen passiert hat befindet es sich in der letzten Kammer - im sogenannten Auslassbereich 18 des Grauwasserbehälters 1, der als Reservoir für das WC-Spülwasser dient. Zum WC-Modul fließt es über den Ablauf 3, der um ein Rohr 22 verlängert ist, damit das ausströmende Wasser kein Sediment mitreißt. Über einen Reinigungsabfluss 5 kann der Grauwasserbehälter 1 komplett entleert werden.

Damit immer genügend Wasser zum Spülen des WC-Moduls vorhanden ist, ist ein Füllstandsensor 11 vorgesehen, der detektiert, sobald nicht mehr genügend Wasser im Behälter 1 ist, sodass der Frischwasserzulauf 12 solange geöffnet wird, bis der Minimalstand erreicht ist. Der Frischwasserzulauf 12 dient gleichzeitig zur Reinigung des Behälters 1 und ist gegen die Stirnwand 20 gerichtet, damit der Wasserstrahl breit aufgefächert wird, um die Sedimente bei geöffnetem Reinigungsabfluss 5 und angehobenen Schiebern 4, 14 und 15 heraus zu spülen. Bei angehobenen Schiebern 4, 14 und 15 ist deren unteres Ende vom Boden 8 des Grauwasserbehälters 1 abgehoben. In der hier veranschaulichten abgesenkten Position stehen die unteren Enden der Schieber 4, 14 und 15 auf dem Boden 8 des Grauwasserbehälters 1 auf.

Der Überlauf kann mit dem Reinigungsabfluss außerhalb des Grauwasserbehälters zusammengeführt werden.

Beschrieben ist eine mikrofilterfreie, wartungsminimierte Aufbereitungsvorrichtung für Grauwasser, die sich selbst reinigt und im laufenden Betrieb ohne Reinigungsmittel auskommt.

Der Strahlbrecher 10 bremst den Zustrom an Grauwasser ab und verteilt es im Einlassbereich. Der Überlauf 23 ist unter dem Strahlbrecher 10 platziert, sodass kein zulaufendes Wasser direkt wieder abgeführt wird. Das Leitblech 26 leitet den Strom um, sodass dieser erst später den Spalt 9 erreicht. Elastische Lippe 7 und Abstreifer 24 als festes Gegenstück an den Kulissen 6, 16 und 17, reinigen die Kulissenspalte 9. Das Ablaufrohr 22 mit Öffnung 21 in erhöhter Position und der gegen die Behälterwand 20 gerichtete Frischwasserzulauf 12 zur Auffächerung des Stroms tragen, wie die oben bereits genannten Merkmale, ebenfalls dazu bei, die sogenannten Life Cycle Costs der erfindungsgemäßen Aufbereitungsvorrichtung zu senken.

Die Zu- und Abläufe des Grauwasserbehälters 1 sind mit diversen, außerhalb des Grauwasserbehälters geführten Leitungen verbunden. So kann der Grauwasserzulauf 2 über eine Grauwasserleitung 37 mit einem Waschbecken verbunden sein. In der Grauwasserleitung 37 kann dabei ein Rückschlagventil vorgesehen sein als Geruchsverschluss und als Druckschutz. Der Überlauf 23 ist über eine Überlaufleitung 43 mit einem Abwassertank verbunden. Hier umfasst die Überlaufleitung 43 ebenfalls ein Rückschlagventil 46. Dieses dient demselben Zweck und könnte als redundant auch wegfallen. Die Überlaufleitung 43 mündet stromabwärts des Rückschlagventils 46 in eine Abwasserleitung 42. Diese ist ihrerseits mit dem Reinigungsabfluss 5 verbunden. Zwischen dem Reinigungsabfluss 5 und der Mündung der Überlaufleitung 43 in die Abwasserleitung 42 ist ein Quetschventil als Absperrorgan 45 in der Abwasserleitung 42 angeordnet. Stromaufwärts des Frischwasserzulaufs 12 und somit zwischen dem Frischwasserzulauf 12 und einem Frischwassertank ist ein Absperrorgan 35 in der Frischwasserzuleitung 32 vorgesehen, über welches die Frischwasserzufuhr zum Grauwasserbehälter 1 geregelt werden kann. Stromabwärts des Ablaufs 3 für aufbereitetes Grauwasser ist gemäß dieser Ausgestaltung wiederum ein Schmutzfänger 49 angeordnet.

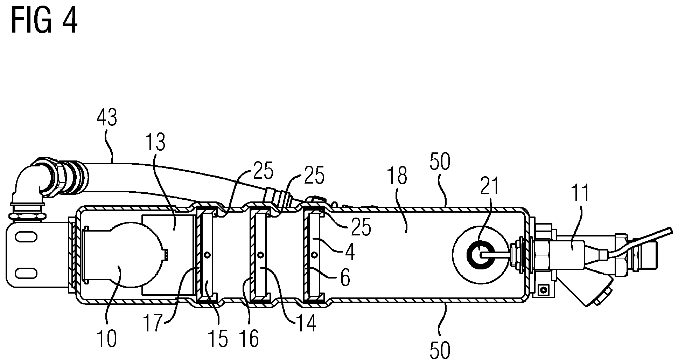

Fig. 4 illustriert die Aufbereitungsvorrichtung für Grauwasser gemäß Fig. 3 durch einen Längsschnitt von oben. Gut zu erkennen sind die beweglichen Schieber 4, 14 und 15, die entsprechenden Führungen 25 an den Seitenwänden 50, die festen Kulissen 6, 16 und 17 sowie der Strahlbrecher 10 im Einlassbereich 13, der Füllstandssenor 11 im Auslaufbereich oberhalb der Öffnung 21 des Ablaufrohrs 22.

## Patentansprüche

1. Wasserversorgungseinrichtung für ein Schienenfahrzeug umfassend:
- wenigstens einen Frischwasserbereich mit
- zumindest einem Frischwassertank (30),
- zumindest einer Frischwasserausgabestelle und
- einer Frischwasserzuleitung zwischen dem zumindest einen Frischwassertank (30) und der zumindest einen Frischwasserausgabestelle,
- wenigstens einen Grauwasserbereich mit
- zumindest einer Grauwassereingabestelle (36),
- zumindest einer Aufbereitungsvorrichtung für Grauwasser, umfassend
- einen Grauwasserbehälter (1),
- einen Grauwasserzulauf (2) in einem Einlassbereich (13) des Grauwasserbehälters (1),
- einen Ablauf (3) für aufbereitetes Grauwasser in einem Auslassbereich (18) des Grauwasserbehälters (1),
- wenigstens einen
Filter (19) zwischen Einlassbereich (13) und Auslassbereich (18) des Grauwasserbehälters (1),
- einen Frischwasserzulauf (12) zur Zufuhr von Frischwasser, welcher im Auslassbereich (18) des Grauwasserbehälters (1) der Aufbereitungsvorrichtung für Grauwasser angeordnet ist und welcher über eine Frischwasserzuleitung (32) mit dem zumindest einen Frischwassertank (30) verbunden ist,
- zumindest einer Ausgabestelle (38) für aufbereitetes Grauwasser,
- einer Grauwasserzuleitung (37) zwischen der zumindest einen Grauwassereingabestelle (36) und dem Grauwasserzulauf (2) im Einlassbereich (13) des Grauwasserbehälters (1) der Aufbereitungsvorrichtung für Grauwasser und
- einer Zuleitung (39) für aufgearbeitetes Grauwasser zwischen dem Ablauf (3) für aufbereitetes Grauwasser im Auslassbereich (18) des Grauwasserbehälters (1) der Aufbereitungsvorrichtung für Grauwasser und der zumindest einen Ausgabestelle (38) für aufbereitetes Grauwasser,
**dadurch gekennzeichnet, dass**
der wenigstens eine Filter (19) zwischen dem Einlassbereich (13) und dem Auslassbereich (18) des Grauwasserbehälters (1) der Aufbereitungsvorrichtung für Grauwasser ein Kulissenfilter (19) ist.

2. Wasserversorgungseinrichtung nach Anspruch 1, **dadurch gekennzeichnet, dass** die zumindest eine Aufbereitungsvorrichtung für Grauwasser einen Füllstandsensor (11) im Auslassbereich (18) des Grauwasserbehälters (1) aufweist.

3. Wasserversorgungseinrichtung nach einem der Ansprüche 1 oder 2, **dadurch gekennzeichnet, dass** die zumindest eine Ausgabestelle (38) für aufbereitetes Grauwasser frei ist von einer Zuleitung von Frischwasser aus dem zumindest einen Frischwassertank (30).

4. Wasserversorgungseinrichtung nach einem der Ansprüche 1 bis 3, **dadurch gekennzeichnet, dass** sie zumindest ein Waschbeckenmodul umfasst, welches die zumindest eine Frischwasserausgabestelle und die zumindest eine Grauwassereingabestelle (36) umfasst.

5. Wasserversorgungseinrichtung nach einem der Ansprüche 1 bis 4, **dadurch gekennzeichnet, dass** sie zumindest ein WC-Modul umfasst, welches die zumindest eine Ausgabestelle für aufbereitetes Grauwasser (38) umfasst.

6. Wasserversorgungseinrichtung nach einem der Ansprüche 1 bis 5, **dadurch gekennzeichnet, dass** eine Pumpe (41) zur Förderung von aufbereitetem Grauwasser zwischen dem Ablauf (3) für aufbereitetes Grauwasser im Auslassbereich (18) des Grauwasserbehälters (1) der Aufbereitungsvorrichtung für Grauwasser und der zumindest einen Ausgabestelle (38) für aufbereitetes Grauwasser vorgesehen ist.

7. Wasserversorgungseinrichtung nach Anspruch 5, **dadurch gekennzeichnet, dass** die Zuleitung (39) für aufgearbeitetes Grauwasser zwischen dem Ablauf (3) für aufbereitetes Grauwasser im Auslassbereich (18) des Grauwasserbehälters (1) der Aufbereitungsvorrichtung für Grauwasser und der zumindest einen Ausgabestelle (38) für aufbereitetes Grauwasser frei ist von einer Pumpe zur Förderung von aufbereitetem Grauwasser, wobei das WC-Modul einen Druckwassererzeuger umfasst.

8. Wasserversorgungseinrichtung nach einem der Ansprüche 1 bis 7, **dadurch gekennzeichnet, dass** die zumindest eine Aufbereitungsvorrichtung für Grauwasser einen Reinigungsabfluss (5) aufweist, welcher bodenseitig im Einlassbereich (13) des Grauwasserbehälters (1) angeordnet ist.

9. Wasserversorgungseinrichtung nach einem der Ansprüche 1 bis 8, **dadurch gekennzeichnet, dass** die zumindest eine Aufbereitungsvorrichtung für Grauwasser einen Überlauf (23) aufweist, welcher im Einlassbereich (13) des Grauwasserbehälters (1) angeordnet ist.

10. Wasserversorgungseinrichtung nach einem der Ansprüche 1 bis 9, **dadurch gekennzeichnet, dass** Schmutzfilter in der Frischwasserzuleitung zwischen dem zumindest einen Frischwassertank (30) und der zumindest einen Frischwasserausgabestelle und/oder in der Zuleitung für aufbereitetes Grauwasser zwischen dem Ablauf (3) für aufbereitetes Grauwasser im Auslassbereich (18) des Grauwasserbehälters (1) der Aufbereitungsvorrichtung für Grauwasser und der zumindest einen Ausgabestelle (38) für aufbereitetes Grauwasser vorgesehen sind.

11. Wasserversorgungseinrichtung nach einem der Ansprüche 1 bis 10, **dadurch gekennzeichnet, dass** stromaufwärts der zumindest einen Frischwasserausgabestelle ein Absperrorgan (34) zur Regulierung des Durchflusses durch die zumindest eine Frischwasserausgabestelle vorgesehen ist und/oder, dass stromaufwärts des Frischwasserzulaufs (12) des Grauwasserbehälters (1) der Aufbereitungsvorrichtung für Grauwasser ein Absperrorgan (35) zur Regulierung des Durchflusses durch den Frischwasserzulauf (12) des Grauwasserbehälters (1) der Aufbereitungsvorrichtung für Grauwasser vorgesehen ist und/oder, dass stromabwärts des Reinigungsabflusses (5) des Grauwasserbehälters (1) der Aufbereitungsvorrichtung für Grauwasser ein Absperrorgan (45) zur Regulierung des Durchflusses durch den Reinigungsabfluss (5) des Grauwasserbehälters (1) der Aufbereitungsvorrichtung für Grauwasser vorgesehen ist.

12. Wasserversorgungseinrichtung nach einem der Ansprüche 1 bis 11, **dadurch gekennzeichnet, dass** der Kulissenfilter (19) zumindest einen beweglichen Schieber (4, 14, 15) aufweist, der in einer abgesenkten Position einen Boden (8) des Grauwasserbehälters (1) berührt und in einer angehobenen Position von diesem abgehoben ist.

13. Wasserversorgungseinrichtung nach einem der Ansprüche 1 bis 12, **dadurch gekennzeichnet, dass** der Boden (8) des Grauwasserbehälters (1) vom Einlassbereich (13) zum Auslassbereich (18) des Grauwasserbehälters (1) der Aufbereitungsvorrichtung für Grauwasser ansteigend ist.

14. Schienenfahrzeug mit wenigstens einer Wasserversorgungseinrichtung nach einem der Ansprüche 1 bis 13.

## Claims

1. Water supply device for a rail vehicle, comprising:
- at least one fresh-water region having
- at least one fresh-water tank (30),
- at least one fresh-water discharge point, and
- a fresh-water supply line between the at least one fresh-water tank (30) and the at least one fresh-water discharge point,
- at least one grey-water region having
- at least one grey-water feed point (36),
- at least one treatment apparatus for grey water, comprising
- a grey-water container (1),
- a grey-water inflow (2) in an inlet region (13) of the grey-water container (1),
- an outflow (3) for treated grey water in an outlet region (18) of the grey-water container (1),
- at least one filter (19) between the inlet region (13) and the outlet region (18) of the grey-water container (1),
- a fresh-water inflow (12) for the supply of fresh water, which is arranged in the outlet region (18) of the grey-water container (1) of the treatment apparatus for grey water and which is connected via a fresh-water supply line (32) to the at least one fresh-water tank (30),
- at least one discharge point (38) for treated grey water,
- a grey-water supply line (37) between the at least one grey-water feed point (36) and the grey-water inflow (2) in the inlet region (13) of the grey-water container (1) of the treatment apparatus for grey water, and
- a supply line (39) for processed grey water between the outflow (3) for treated grey water in the outlet region (18) of the grey-water container (1) of the treatment apparatus for grey water and the at least one discharge point (38) for treated grey water,
**characterized in that**
the at least one filter (19) between the inlet region (13) and the outlet region (18) of the grey-water container (1) of the treatment apparatus for grey water is a gate filter (19) .

2. Water supply device according to Claim 1, **characterized in that** the at least one treatment apparatus for grey water has a fill level sensor (11) in the outlet region (18) of the grey-water container (1).

3. Water supply device according to either of Claims 1 and 2, **characterized in that** the at least one discharge point (38) for treated grey water is free of a supply line of fresh water from the at least one fresh-water tank (30).

4. Water supply device according to one of Claims 1 to 3, **characterized in that** it comprises at least one washbasin module, which comprises the at least fresh-water discharge point and the at least one grey-water feed point (36).

5. Water supply device according to one of Claims 1 to 4, **characterized in that** it comprises at least one WC module, which comprises the at least one discharge point for treated grey water (38).

6. Water supply device according to one of Claims 1 to 5, **characterized in that** a pump (41) for conveying treated grey water between the outflow (3) for treated grey water in the outlet region (18) of the grey-water container (1) of the treatment apparatus for grey water and the at least one discharge point (38) for treated grey water is provided.

7. Water supply device according to Claim 5, **characterized in that** the supply line (39) for processed grey water between the outflow (3) for treated grey water in the outlet region (18) of the grey-water container (1) of the treatment apparatus for grey water and the at least one discharge point (38) for treated grey water is free of a pump for conveying treated grey water, wherein the WC module comprises a pressurized-water generator.

8. Water supply device according to one of Claims 1 to 7, **characterized in that** the at least one treatment apparatus for grey water has a cleaning drain (5), which is arranged in the inlet region (13) of the grey-water container (1) on the base side.

9. Water supply device according to one of Claims 1 to 8, **characterized in that** the at least one treatment apparatus for grey water has an overflow (23), which is arranged in the inlet region (13) of the grey-water container (1).

10. Water supply device according to one of Claims 1 to 9, **characterized in that** dirt filters are provided in the fresh-water supply line between the at least one fresh-water tank (30) and the at least one fresh-water discharge point and/or in the supply line for treated grey water between the outflow (3) for treated grey water in the outlet region (18) of the grey-water container (1) of the treatment apparatus for grey water and the at least one discharge point (38) for treated grey water.

11. Water supply device according to one of Claims 1 to 10, **characterized in that** provision is made upstream of the at least one fresh-water discharge point of a shut-off member (34) for regulating the flow through the at least one fresh-water discharge point, and/or **in that** provision is made upstream of the fresh-water inflow (12) of the grey-water container (1) of the treatment apparatus for grey water of a shut-off member (35) for regulating the flow through the fresh-water inflow (12) of the grey-water container (1) of the treatment apparatus for grey water, and/or **in that** provision is made downstream of the cleaning drain (5) of the grey-water container (1) of the treatment apparatus for grey water of a shut-off member (45) for regulating the flow through the cleaning drain (5) of the grey-water container (1) of the treatment apparatus for grey water.

12. Water supply device according to one of Claims 1 to 11, **characterized in that** the gate filter (19) has at least one movable slide (4, 14, 15) which, in a lowered position, makes contact with a base (8) of the grey-water container (1) and which, in a raised position, is raised off therefrom.

13. Water supply device according to one of Claims 1 to 12, **characterized in that** the base (8) of the grey-water container (1) rises from the inlet region (13) to the outlet region (18) of the grey-water container (1) of the treatment apparatus for grey water.

14. Rail vehicle having at least one water supply device according to one of Claims 1 to 13.

## Revendications

1. Dispositif d'alimentation en eau d'un véhicule ferroviaire comprenant :
- au moins une partie d'eau fraîche comprenant
- au moins un réservoir (30) d'eau fraîche,
- au moins un point de sortie d'eau fraîche et
- un conduit d'apport d'eau fraîche entre le au moins un réservoir (30) d'eau fraîche et le au moins un point de sortie d'eau fraîche,
- au moins une partie d'eaux grises comprenant
- au moins un point (36) d'entrée d'eaux grises,
- au moins un système de traitement d'eaux grises, comprenant
- un réservoir (1) d'eaux grises,
- une arrivée (2) d'eaux grises dans une partie (13) d'entrée du réservoir (1) d'eaux grises,
- une évacuation (3) d'eaux grises traitées dans une partie (18) de sortie du réservoir (1) d'eaux grises,
- au moins un filtre (19) entre la partie (13) d'entrée et la partie (18) de sortie du réservoir (1) d'eaux grises,
- une arrivée (12) d'eau fraîche pour l'apport d'eau fraîche, qui est disposée dans la partie (18) de sortie du récipient (1) d'eaux grises du système de traitement d'eaux grises et qui communique par un conduit (32) d'apport d'eau fraîche avec le au moins un réservoir (30) d'eau fraîche,
- au moins un point (38) de sortie des eaux grises traitées,
- un conduit (37) d'apport d'eaux grises entre le au moins un point (36) d'entrée d'eaux grises et l'arrivée (2) d'eaux grises dans la partie (13) d'entrée du récipient (1) d'eaux grises du système de traitement d'eaux grises et
- un conduit (39) d'arrivée d'eaux grises traitées entre l'évacuation (3) d'eaux grises traitées dans la partie (18) de sortie du récipient (1) d'eaux grises du système de traitement d'eaux grises et le au moins point (38) de sortie des eaux grises traitées,
**caractérisé en ce que**
le au moins un filtre (19) entre la partie (13) d'entrée et la partie (18) de sortie du récipient (1) d'eaux grises du système de traitement d'eaux grises est un filtre (19) à coulisse.

2. Dispositif d'alimentation en eau suivant la revendication 1, **caractérisé en ce que** le au moins un système de traitement d'eaux grises a un capteur (11) de niveau dans la partie (18) de sortie du récipient (1) d'eaux grises.

3. Dispositif d'alimentation en eau suivant l'une des revendications 1 ou 2, **caractérisé en ce que** au moins un point (38) de sortie des eaux grises traitées est sans un conduit d'arrivée d'eau fraîche provenant du au moins un réservoir (30) d'eau fraîche.

4. Dispositif d'alimentation en eau suivant l'une des revendications 1 à 3, **caractérisé en ce qu'**il comprend au moins un module d'évier, qui comprend le au moins un point de sortie d'eau fraîche et le au moins un point (36), d'entrée d'eaux grises.

5. Dispositif d'alimentation en eau suivant l'une des revendications 1 à 4, **caractérisé en ce qu'**il comprend au moins un module de WC, qui comprend le au moins un point de sortie d'eaux grises (38) traitées.

6. Dispositif d'alimentation en eau suivant l'une des revendications 1 à 5, **caractérisé en ce qu'**il est prévu une pompe (41) pour véhiculer des eaux grises traitées entre l'évacuation (3) des eaux grises traitées dans la partie (18) de sortie du récipient (1) d'eaux grises du système de traitement d'eaux grises et le au moins un point (38) de sortie d'eaux grises traitées.

7. Dispositif d'alimentation en eau suivant la revendication 5, **caractérisé en ce que** le conduit (39) d'apport d'eaux grises traitées entre l'évacuation (3) d'eaux grises traitées dans la partie (18) de sortie du récipient (1) d'eaux grises du système de traitement d'eaux grises et le au moins un point (38) de sortie d'eaux grises traitées est sans une pompe pour véhiculer des eaux grises traitées, le module de WC comprenant un producteur d'eau sous pression.

8. Dispositif d'alimentation en eau suivant l'une des revendications 1 à 7, **caractérisé en ce que** au moins un système de traitement d'eaux grises a une évacuation (5) de nettoyage, qui est disposée du côté du fond dans la partie (13) d'entrée du récipient (1) d'eaux grises.

9. Dispositif d'alimentation en eau suivant l'une des revendications 1 à 8, **caractérisé en ce que** le au moins un système de traitement d'eaux grises a un trop plein (23), qui est disposé dans la partie (13) d'entrée du récipient (1) d'eaux grises.

10. Dispositif d'alimentation en eau suivant l'une des revendications 1 à 9, **caractérisé en ce qu'**il est prévu des filtres de saletés dans le conduit d'apport d'eau fraîche entre le au moins un réservoir (30) d'eau fraîche et le au moins un point de sortie d'eau fraîche et/ou dans le conduit d'apport d'eaux grises traitées entre l'évacuation (3) d'eaux grises traitées dans la partie (18) de sortie du récipient (1) d'eaux grises du système de traitement d'eaux grises et le au moins un point (38) de sortie d'eaux grises traitées.

11. Dispositif d'alimentation en eau suivant l'une des revendications 1 à 10, **caractérisé en ce qu'**il est prévu, en amont du au moins un point de sortie d'eau fraîche, un organe (34) d'arrêt pour réguler le débit dans le au moins un point de sortie d'eau fraîche et/ou **en ce qu'**il est prévu, en amont du conduit (12) d'apport d'eau fraîche du récipient (1) d'eaux grises du système de traitement d'eaux grises un organe (35) d'arrêt pour réguler le débit dans le conduit (12) d'apport d'eau fraîche du récipient (1) d'eaux grises du système de traitement d'eaux grises et/ou **en ce qu'**il est prévu, en aval de l'évacuation (5) de nettoyage du récipient (1) d'eaux grises du système de traitement d'eaux grises, un organe (45) d'arrêt pour réguler le débit dans l'évacuation (5) de nettoyage du récipient (1) d'eaux grises du système de traitement d'eaux grises.

12. Dispositif d'alimentation en eau suivant l'une des revendications 1 à 11, **caractérisé en ce que** le filtre (19) à coulisse a au moins un tiroir (4, 14, 15) mobile qui, dans une position abaissée, touche un fond (8) du récipient (1) d'eaux grises et, dans une position relevée, en est soulevé.

13. Dispositif d'alimentation en eau suivant l'une des revendications 1 à 12, **caractérisé en ce que** le fond (8) du récipient (1) d'eaux grises est en pente ascendante de la partie (13) d'entrée à la partie (18) de sortie du récipient (1) d'eaux grises du système de traitement d'eaux grises.

14. Véhicule ferroviaire ayant au moins un dispositif d'alimentation en eau selon l'une des revendications 1 à 13.
